# EUROPEAN PATENT APPLICATION

(11) **EP 4 502 883 A1**
(43) Date of publication of application: **05.02.2025**
(21) Application number: 23799513.9
(22) Date of filing: 02.05.2023
(51) Int. Cl.: G06N 20/00

(54) **LEARNING DEVICE, LEARNING METHOD, AND LEARNING PROGRAM**

(30) Priority: 02.05.2022 JP 2022076197
(71) Applicant: Mitsubishi Heavy Industries, Ltd., Tokyo 100-8332 (JP)
(72) Inventor: KATAOKA, Yujiro, Tokyo 100-8332 (JP); ITO, Masayuki, Tokyo 100-8332 (JP); MATSUNAMI, Natsuki, Tokyo 100-8332 (JP)
(74) Representative: Hoffmann Eitle
(86) International application number: PCT/JP2023/017149
(87) International publication number: WO 2023/214584

(57) **Abstract**

There is provided a learning device including: a processing unit that performs reinforcement learning of a learning model of an agent under a competitive environment in which agents compete against each other, in which the learning model includes a hyperparameter, and the processing unit executes: a step of evaluating strengths of a plurality of the agents to be opponents of the agent as a learning target; a step of setting a competitive probability for the agent as the learning target according to the strength of the agent to be the opponent; a step of setting the agent to be the opponent based on the competitive probability; and a step of executing reinforcement learning of the agent as the learning target by causing the agent as the learning target to compete against the set agent to be the opponent.

## Description

### Technical Field

The present disclosure relates to a learning device, a learning method, and a learning program.

### Background Art

In the related art, it is known to perform reinforcement learning of an agent based on a competition result between agents (for example, refer to PTL 1).

### Citation List

### Patent Literature

[PTL 1] Japanese Unexamined Patent Application Publication No. 2019-197592

### Summary of Invention

### Technical Problem

Here, in a case where an opponent of an agent as a learning target is fixed, as a result obtained by performing reinforcement learning, a learning model that is a strategy specialized for the opponent may be generated. For this reason, it is considered to obtain a learning model having versatility by setting a plurality of opponents having different strategies, replacing each opponent in accordance with a certain learning step (also referred to as a swap step), and performing learning through a competition.

However, in a case where the opponent is replaced in accordance with a certain learning step, it is likely to perform learning of the learning model to obtain more rewards through a competition against a specific opponent that is easier to win. For this reason, there is a problem that it is difficult to obtain a general-purpose model that can acquire more rewards from various opponents.

Therefore, an object of the present disclosure is to provide a learning device, a learning method, and a learning program capable of appropriately and efficiently executing learning of a learning model including a hyperparameter even in a case where there are various opponents.

### Solution to Problem

According to the present disclosure, there is provided a learning device including: a processing unit that performs reinforcement learning of a learning model of an agent under a competitive environment in which agents compete against each other, in which the learning model includes a hyperparameter, and the processing unit executes: a step of evaluating strengths of a plurality of the agents to be opponents of the agent as a learning target; a step of setting a competitive probability for the agent as the learning target according to the strength of the agent to be the opponent; a step of setting the agent to be the opponent based on the competitive probability; and a step of executing reinforcement learning of the agent as the learning target by causing the agent as the learning target to compete against the set agent to be the opponent.

According to the present disclosure, there is provided a learning method of performing reinforcement learning of a learning model of an agent under a competitive environment in which agents compete against each other by using a learning device, in which the learning model includes a hyperparameter, and the learning method causes the learning device to execute: a step of evaluating strengths of a plurality of the agents to be opponents of the agent as a learning target; a step of setting a competitive probability for the agent as the learning target according to the strength of the agent to be the opponent; a step of setting the agent to be the opponent based on the competitive probability; and a step of executing reinforcement learning of the agent as the learning target by causing the agent as the learning target to compete against the set agent to be the opponent.

According to the present disclosure, there is provided a learning program for performing reinforcement learning of a learning model of an agent under a competitive environment in which agents compete against each other by using a learning device, in which the learning model includes a hyperparameter, and the learning program causes the learning device to execute: a step of evaluating strengths of a plurality of the agents to be opponents of the agent as a learning target; a step of setting a competitive probability for the agent as the learning target according to the strength of the agent to be the opponent; a step of setting the agent to be the opponent based on the competitive probability; and a step of executing reinforcement learning of the agent as the learning target by causing the agent as the learning target to compete against the set agent to be the opponent.

### Advantageous Effects of Invention

According to the present disclosure, even in a case where there are various opponents, it is possible to appropriately and efficiently execute learning of the learning model including the hyperparameter.

### Brief Description of Drawings

Fig. 1 is a diagram for explaining learning using a learning model according to the present embodiment.
Fig. 2 is a diagram schematically illustrating a learning device according to the present embodiment.
Fig. 3 is a diagram illustrating a flow of a learning method according to the present embodiment.
Fig. 4 is a diagram for explaining a learning method according to the present embodiment.

### Description of Embodiments

Hereinafter, an embodiment according to the present invention will be described in detail based on the drawings. Note that the present invention is not limited to the embodiment. In addition, components in the embodiment described below include those that can be easily replaced by those skilled in the art, or those that are substantially the same. Further, the components described below can be combined as appropriate, and in a case where a plurality of embodiments are present, the embodiments can be combined.

### [Embodiment]

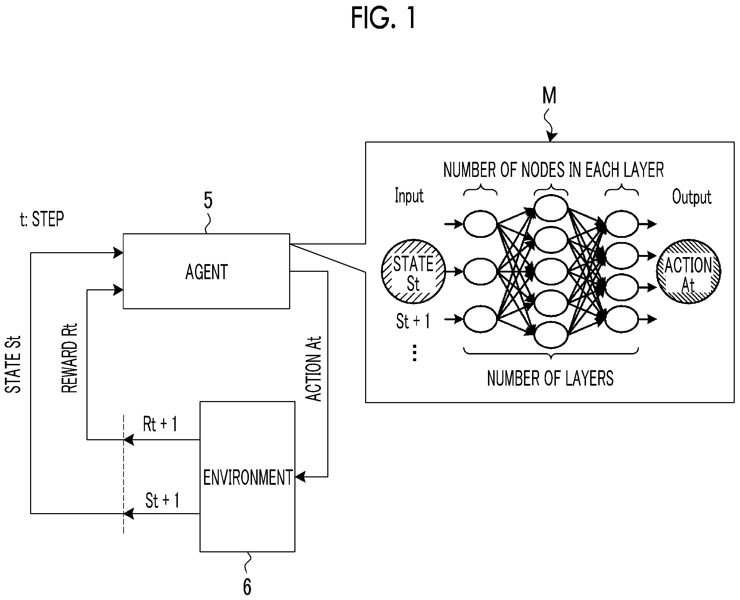

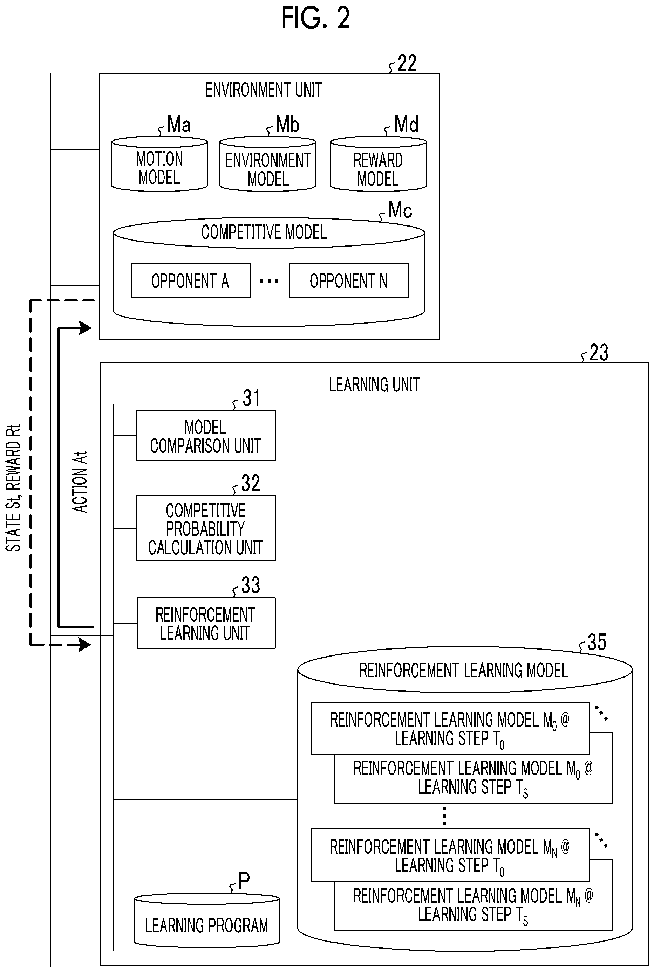

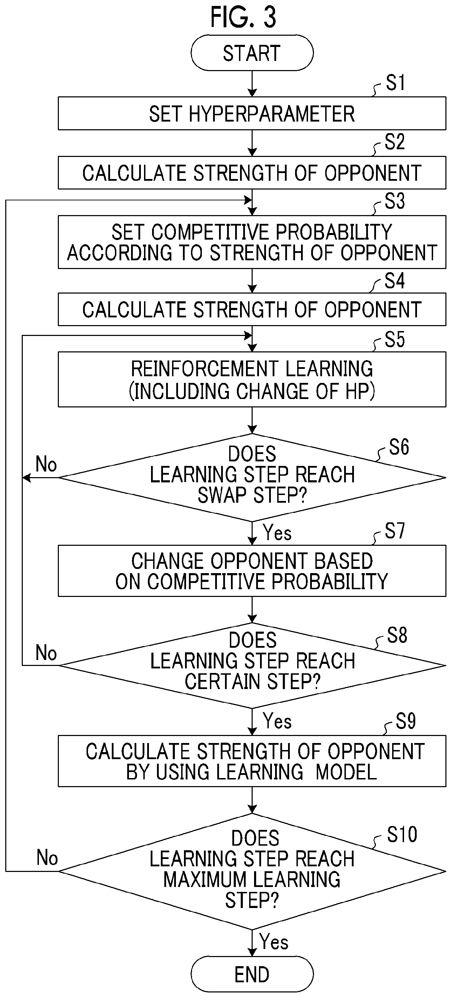

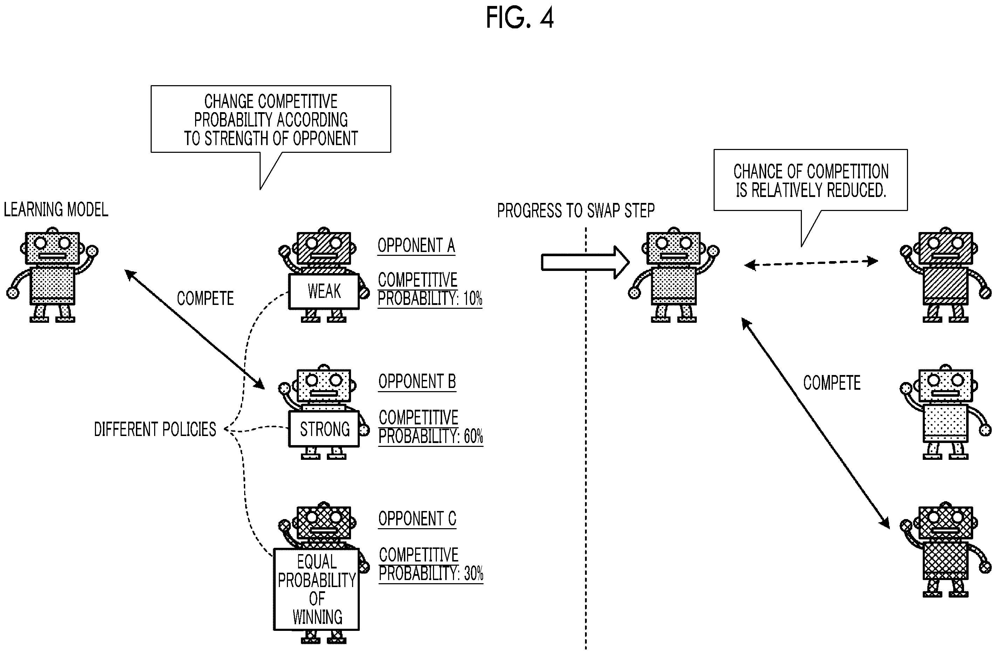

A learning device 10 and a learning method according to the present embodiment are a device and a method of performing learning of a learning model including a hyperparameter. Fig. 1 is a diagram for explaining learning using a learning model according to the present embodiment. Fig. 2 is a diagram schematically illustrating a learning device according to the present embodiment. Fig. 3 is a diagram illustrating a flow of a learning method according to the present embodiment. Fig. 4 is a diagram for explaining a learning method according to the present embodiment.

### (Learning using Learning Model)

First, learning using a learning model M will be described with reference to Fig. 1. The learning model M is mounted on an agent 5 that executes an action At. As the target agent 5, for example, a machine capable of executing an operation for a robot, a vehicle, a vessel, an aircraft, or the like is applied. The agent 5 executes a predetermined action At under a predetermined environment 6 by using the learning model M.

As illustrated in Fig. 1, the learning model M is a neural network including a plurality of nodes. The neural network is a network in which a plurality of nodes are connected, and has a plurality of layers. The plurality of nodes are provided in each of the layers. Parameters of the neural network include weights and biases between the nodes. In addition, as the parameters of the neural network, there are hyperparameters such as the number of layers, the number of nodes, and a learning rate. In the present embodiment, in the learning of the learning model M, learning on the learning model M including the hyperparameters is performed.

Next, the learning using the learning model M will be described. As the learning, there is reinforcement learning. The reinforcement learning is an unsupervised learning. The agent 5 performs learning of the weights and the biases between the nodes in the learning model M such that a reward Rt assigned under a predetermined environment 6 is maximized.

In the reinforcement learning, the agent 5 acquires a state St from the environment 6 (an environment unit 22 to be described later), and also acquires a reward Rt from the environment 6. In addition, the agent 5 selects an action At from the learning model M based on the acquired state St and the acquired reward Rt. In a case where the action At selected by the agent 5 is executed, the state St of the agent 5 in the environment 6 transitions to a state St+1. In addition, a reward Rt+1 based on the executed action At, the state St before the transition, and the state St+1 after the transition is assigned to the agent 5. Further, in the reinforcement learning, the above learning is repeated by the predetermined number of learning steps for evaluation such that the reward Rt assigned to the agent 5 is maximized.

### (Learning Device)

Next, the learning device 10 will be described with reference to Fig. 2. The learning device 10 executes reinforcement learning of the agent 5 in an environment serving as a virtual space. The learning device 10 includes an environment unit 22 and a learning unit 23. Note that the environment unit 22 and the learning unit 23 function as a processing unit that performs learning of the learning model of the agent and a storage unit that stores various data to be used in the learning. Note that the hardware configuration of the learning device 10 is not particularly limited. In the present embodiment, in Fig. 2, a block illustrated in a rectangular shape functions as a processing unit, and a block illustrated in a cylindrical shape functions as a storage unit.

The environment unit 22 provides a competitive environment in which the agents 5 compete against each other. Specifically, the environment unit 22 assigns a reward Rt to the agent 5 or derives a state St of the agent 5 for transition by the action At. The environment unit 22 stores various models such as a motion model Ma, an environment model Mb, and a competitive model Mc. The competitive model Mc is a learning model of the agent 5 to be an opponent of the agent 5 as a learning target, and competitive models Mc for an opponent A to an opponent N are prepared. The environment unit 22 receives the action At performed by the agent 5 as an input, and calculates the state St of the agent 5 as an output by using the motion model Ma, the environment model Mb, and the competitive model Mc. The calculated state St is output to the learning unit 23. In addition, the environment unit 22 stores a reward model Md that calculates a reward. The reward model Md is a model that receives the action At performed by the agent 5, the state St, and the state St+1 as a transition destination as inputs and calculates a reward Rt to be assigned to the agent 5 as an output. The calculated reward Rt is output to the learning unit 23.

The learning unit 23 executes learning of the learning model M. The learning unit 23 executes reinforcement learning as learning. The learning unit 23 includes a model comparison unit 31 that compares the strength of the competitive model Mc, a competitive probability calculation unit 32 that calculates a competitive probability according to the strength of the competitive model Mc, and a reinforcement learning unit 33 that performs reinforcement learning. In addition, the learning unit 23 includes a database 35 that stores a reinforcement learning model M (hereinafter, also simply referred to as a learning model M) as a learning result obtained by reinforcement learning.

The model comparison unit 31 compares, for example, the strength of the learning model M of the agent 5 as the learning target and the strength of the competitive model Mc of the agent 5 to be an opponent, and evaluates whether or not the competitive model Mc is strong against the learning model M, based on a comparison result. Specifically, the model comparison unit 31 causes the learning model M after learning is stopped (after learning is completed) to compete against the competitive model Mc, and sets a winning rate or a rating of the competitive model Mc, as a strength evaluation index. The model comparison unit 31 determines that the competitive model Mc is strong in a case where the winning rate or the rating of the competitive model Mc is higher than the winning rate or the rating of the learning model M, and determines that the competitive model Mc is weak in a case where the winning rate or the rating of the competitive model Mc is lower than the winning rate or the rating of the learning model M.

Note that the model comparison unit 31 may compare the strengths of the competitive models Mc with each other and evaluate whether or not the competitive model Mc is strong, based on a comparison result. Specifically, the model comparison unit 31 sets a predetermined competitive model Mc as a reference, causes the reference competitive model Mc to compete against another competitive model Mc, and sets a winning rate or an ELO rating of the competitive model Mc as a strength evaluation index. The model comparison unit 31 determines that the competitive model Mc is strong in a case where the winning rate or the rating of the competitive model Mc is higher than the winning rate or the rating of the reference competitive model Mc, and determines that the competitive model Mc is weak in a case where the winning rate or the rating of the competitive model Mc is lower than the winning rate or the rating of the reference competitive model Mc.

In addition, the model comparison unit 31 may use a Kullback-Leibler divergence (KL distance) instead of the winning rate or the rating. The KL divergence is an index indicating a similarity between probability distributions of the states St and the actions At of the models, and the models are the learning model M and the competitive model Mc, or the competitive models Mc. In a case where the KL divergence is small, the similarity is high, and in a case where the KL divergence is large, the similarity is low. The model comparison unit 31 determines that the competitive model Mc is strong in a case where the KL divergence is equal to or larger than a preset threshold value, and determines that the competitive model Mc is weak in a case where the KL divergence is smaller than the threshold value.

The competitive probability calculation unit 32 calculates and sets a competitive probability according to the strength of the competitive model Mc. Specifically, the competitive probability calculation unit 32 calculates a competitive probability of the agent 5 as an opponent such that the competitive probability is lower as the strength of the agent 5 that is evaluated in the model comparison unit 31 is weaker. In other words, the competitive probability calculation unit 32 calculates a competitive probability of the agent 5 as an opponent such that the competitive probability is higher as the strength of the agent 5 that is evaluated in the model comparison unit 31 is stronger. Here, the competitive probability is a ratio at which each of a plurality of agents 5 to be opponents competes against the agent 5 as the learning target, and is calculated such that a sum of all the competitive probabilities of the plurality of competitive models Mc is 100%. For example, as illustrated in Fig. 4, three competitive models Mc are prepared as opponents, and the competitive probability of a weak competitive model Mc (opponent A) is 10%, the competitive probability of a strong competitive model Mc (opponent B) is 60%, and the competitive probability of a competitive model Mc (opponent C) having an equal probability of winning is 30%.

The reinforcement learning unit 33 executes learning based on the reward Rt assigned from the environment unit 22, and executes reinforcement learning of the learning model M. Specifically, the reinforcement learning unit 33 executes reinforcement learning of the learning model M by a predetermined learning step T while updating various parameters such that the reward Rt assigned to each agent 5 is maximized. Here, as the predetermined learning step T, there are a swap step that is set for each opponent, a certain step that is an end of the change of the opponent, and a maximum learning step that is an end of learning. In addition, the reinforcement learning unit 33 acquires the reinforcement learning model M that is a learning result of reinforcement learning by executing reinforcement learning of the learning model M, and stores, in the database 35, the reinforcement learning model M that is acquired each time the weights and the biases between the nodes are updated. Assuming that initial values of the weights and the biases between the nodes are 0 and update values of the weights and the biases between the nodes are N, and that an initial step of the learning steps T is 0 and a final step of the learning steps T is S, the database 35 stores the learning models from the reinforcement learning model M₀ to the reinforcement learning model M_{N}, and stores the reinforcement learning model M from a learning step T₀ to a learning step Ts in each of the reinforcement learning models M₀ to M_{N}.

### (Learning Method)

Next, a learning method executed by the learning device 10 will be described with reference to Fig. 3 and Fig. 4. In the learning method, first, the learning device 10 executes a step of setting a parameter value of the hyperparameter of the learning model M (step S1). In step S1, the parameter value of the hyperparameter is arbitrarily set.

Subsequently, in the learning method, the model comparison unit 31 of the learning device 10 executes a step of evaluating the strength of the opponent (step S2). Specifically, in step S2, the model comparison unit 31 calculates an evaluation index of the strength of the competitive model Mc, such as a winning rate, a rating, or a KL divergence of the opponent.

Next, in the learning method, the competitive probability calculation unit 32 of the learning device 10 executes a step of setting a competitive probability according to the strength of the competitive model Mc that is calculated in step S2 (step S3). In step S3, the competitive probability calculation unit 32 calculates a competitive probability that is set for each of the competitive models Mc from the evaluation index of the strength of the competitive model Mc that is calculated in step S2.

After the execution of step S3, in the learning method, the learning device 10 executes a step of setting the agent 5 (the competitive model Mc) to be an opponent, based on the competitive probability calculated in step S3 (step S4). In step S4, the learning device 10 sets the agent 5 to be an opponent by random selection based on the competitive probability.

In addition, in the learning method, a step of executing reinforcement learning of the learning model M by causing the competitive model Mc that is set in step S4 to compete against the learning model M of the agent 5 as the learning target is performed (step S5). In step S5, the reinforcement learning unit 33 of the learning device 10 executes reinforcement learning of the learning model M such that the reward Rt assigned to the agent 5 is maximized. In addition, in step S5, the reinforcement learning unit 33 stores the learning models M₀ to M_{N} obtained by executing reinforcement learning in the database 35.

Next, in the learning method, the reinforcement learning unit 33 of the learning device 10 determines whether or not the learning step T reaches the swap step (step S6). In step S6, in a case where the reinforcement learning unit 33 determines that the learning step T reaches the swap step (Yes in step S6), the reinforcement learning unit 33 executes a step of changing the opponent by random selection based on the competitive probability (step S7). In step S7, as in step S4, the learning device 10 changes the agent 5 (the competitive model Mc) to be an opponent, based on the competitive probability that is calculated in step S3.

On the other hand, in step S6, in a case where the reinforcement learning unit 33 determines that the learning step T does not reach the swap step (No in step S6), the process proceeds to step S5 again, and processing of step S5 to step S6 is repeatedly executed until the learning step T reaches the swap step.

After the execution of step S7, in the learning method, the reinforcement learning unit 33 of the learning device 10 determines whether or not the learning step T reaches the certain step (step S8). In step S8, in a case where the reinforcement learning unit 33 determines that the learning step T reaches the certain step (Yes in step S8), the model comparison unit 31 calculates and evaluates the strength of the opponent by using the learning model M obtained by performing reinforcement learning (step S9). In step S9, the model comparison unit 31 of the learning device 10 executes a step of evaluating the strength of the opponent by the same evaluation method as in step S2, using, as a reference, the learning model M obtained by performing reinforcement learning.

On the other hand, in step S8, in a case where the reinforcement learning unit 33 determines that the learning step T does not reach the certain step (No in step S8), the process proceeds to step S5 again, and processing of step S5 to step S8 is repeatedly executed until the learning step T reaches the certain step.

After the execution of step S9, in the learning method, the reinforcement learning unit 33 of the learning device 10 determines whether or not the learning step T reaches the maximum learning step S (step S10). In step S10, in a case where the reinforcement learning unit 33 determines that the learning step T reaches the maximum learning step S (Yes in step S10), reinforcement learning is ended, and a series of learning methods is ended. On the other hand, in step S10, in a case where the reinforcement learning unit 33 determines that the learning step T does not reach the maximum learning step S (No in step S 10), the process proceeds to step S3, and processing of step S3 to step S10 is repeatedly executed until the learning step T reaches the maximum learning step S.

In this manner, the learning unit 23 that executes step S1 to step S10 described above functions as a processing unit for causing the agent 5 to execute reinforcement learning. In addition, the learning device 10 stores a learning program P for executing the above learning method in a storage unit of the learning device 10.

Fig. 4 is a diagram for explaining the learning method described above. As illustrated in Fig. 4, the learning model M executes reinforcement learning by a competition against an opponent (in Fig. 4, a strong opponent B) having a predetermined strength which is set based on the competitive probability until the learning step T reaches the swap step. Thereafter, the opponent is changed based on the competitive probability, and the learning model M executes again reinforcement learning by a competition against an opponent (in Fig. 4, an opponent C having an equal probability of winning) having a predetermined strength which is set based on the competitive probability until the learning step T reaches the swap step. In the change of the opponent based on the competitive probability, the competitive probability of the weak opponent is low, and thus, an opportunity of a competition against the weak opponent is reduced as compared with an opportunity of a competition against the strong opponent.

As described above, the learning device 10, the learning method, and the learning program P according to the present embodiment are understood, for example, as follows.

According to a first aspect, there is provided a learning device 10 including: a processing unit that performs reinforcement learning of a learning model M of an agent 5 under a competitive environment in which agents 5 compete against each other, in which the learning model M includes a hyperparameter, and the processing unit executes: a step S2 of evaluating strengths of a plurality of the agents 5 to be opponents of the agent 5 as a learning target; a step S3 of setting a competitive probability for the agent 5 as the learning target according to the strength of the agent 5 to be the opponent; a step S4 of setting the agent 5 to be the opponent based on the competitive probability; and a step S5 of executing reinforcement learning of the agent 5 as the learning target by causing the agent 5 as the learning target to compete against the set agent 5 to be the opponent.

According to this configuration, it is possible to provide a learning opportunity according to the strength of the opponent, and thus, it is possible to execute reinforcement learning of the learning model M according to the strength of the opponent. For this reason, under a competitive environment, even in a case where there are various opponents, it is possible to appropriately and efficiently execute learning of the learning model M including the hyperparameter.

In a second aspect, in the step S3 of setting the competitive probability, the competitive probability is set to be lower as the strength of the agent 5 to be the opponent is weaker among the plurality of agents 5 to be opponents.

According to this configuration, in a case where the strength of the opponent is strong, the learning opportunities for reinforcement learning of the learning model M can be increased. On the other hand, in a case where the strength of the opponent is weak, the learning opportunities for reinforcement learning of the learning model M can be reduced. Therefore, it is possible to execute appropriate reinforcement learning according to the opponent.

In a third aspect, in the step S2 of evaluating the strengths of the agents 5, as an index of the strength of the agent 5, at least one of a competitive winning rate, a rating, or a KL divergence is included.

According to this configuration, it is possible to appropriately evaluate the strength of the opponent.

According to a fourth aspect, there is provided a learning method of performing reinforcement learning of a learning model M of an agent 5 under a competitive environment
in which agents 5 compete against each other by using a learning device 10, in which the learning model M includes a hyperparameter, and the learning method causes the learning device 10 to execute: a step S2 of evaluating strengths of a plurality of the agents 5 to be opponents of the agent 5 as a learning target; a step S3 of setting a competitive probability for the agent 5 as the learning target according to the strength of the agent 5 to be the opponent; a step S4 of setting the agent 5 to be the opponent based on the competitive probability; and a step S5 of executing reinforcement learning of the agent 5 as the learning target by causing the agent 5 as the learning target to compete against the set agent 5 to be the opponent.

According to this configuration, it is possible to provide a learning opportunity according to the strength of the opponent, and thus, it is possible to execute reinforcement learning of the learning model M according to the strength of the opponent. For this reason, under a competitive environment, even in a case where there are various opponents, it is possible to appropriately and efficiently execute learning of the learning model M including the hyperparameter.

According to a fifth aspect, there is provided a learning program P for performing reinforcement learning of a learning model M of an agent 5 under a competitive environment in which agents 5 compete against each other by using a learning device 10, in which the learning model M includes a hyperparameter, and the learning program P causes the learning device 10 to execute: a step S2 of evaluating strengths of a plurality of the agents 5 to be opponents of the agent 5 as a learning target; a step S3 of setting a competitive probability for the agent 5 as the learning target according to the strength of the agent 5 to be the opponent; a step S4 of setting the agent 5 to be the opponent based on the competitive probability; and a step S5 of executing reinforcement learning of the agent 5 as the learning target by causing the agent 5 as the learning target to compete against the set agent 5 to be the opponent.

According to this configuration, it is possible to provide a learning opportunity according to the strength of the opponent, and thus, it is possible to execute reinforcement learning of the learning model M according to the strength of the opponent. For this reason, under a competitive environment, even in a case where there are various opponents, it is possible to appropriately and efficiently execute learning of the learning model M including the hyperparameter.

### Reference Signs List

5: agent
10: learning device
22: environment unit
23: learning unit
31: model comparison unit
32: competitive probability calculation unit
33: reinforcement learning unit
35: database
M: learning model
Ma: motion model
Mb: environment model
Mc: competitive model
Md: reward model
P: learning program

## Claims

1. A learning device comprising:
a processing unit that performs reinforcement learning of a learning model of an agent under a competitive environment in which agents compete against each other,
wherein the learning model includes a hyperparameter, and
the processing unit executes:
a step of evaluating strengths of a plurality of the agents to be opponents of the agent as a learning target;
a step of setting a competitive probability for the agent as the learning target according to the strength of the agent to be the opponent;
a step of setting the agent to be the opponent based on the competitive probability; and
a step of executing reinforcement learning of the agent as the learning target by causing the agent as the learning target to compete against the set agent to be the opponent.

2. The learning device according to Claim 1,
wherein, in the step of setting the competitive probability, the competitive probability is set to be lower as the strength of the agent to be the opponent is weaker among the plurality of agents to be the opponents.

3. The learning device according to Claim 1 or 2,
wherein, in the step of evaluating the strengths of the agents, as an index of the strength of the agent, at least one of a competitive winning rate, a rating, or a KL divergence is included.

4. A learning method of performing reinforcement learning of a learning model of an agent under a competitive environment in which agents compete against each other by using a learning device,
wherein the learning model includes a hyperparameter, and
the learning method causes the learning device to execute:
a step of evaluating strengths of a plurality of the agents to be opponents of the agent as a learning target;
a step of setting a competitive probability for the agent as the learning target according to the strength of the agent to be the opponent;
a step of setting the agent to be the opponent based on the competitive probability; and
a step of executing reinforcement learning of the agent as the learning target by causing the agent as the learning target to compete against the set agent to be the opponent.

5. A learning program for performing reinforcement learning of a learning model of an agent under a competitive environment in which agents compete against each other by using a learning device,
wherein the learning model includes a hyperparameter, and
the learning program causes the learning device to execute:
a step of evaluating strengths of a plurality of the agents to be opponents of the agent as a learning target;
a step of setting a competitive probability for the agent as the learning target according to the strength of the agent to be the opponent;
a step of setting the agent to be the opponent based on the competitive probability; and
a step of executing reinforcement learning of the agent as the learning target by causing the agent as the learning target to compete against the set agent to be the opponent.
